# EUROPEAN PATENT SPECIFICATION

(11) **EP 2 080 878 B1**
(45) Date of publication and mention of the grant of the patent: **23.09.2015**
(21) Application number: 07831571.0
(22) Date of filing: 09.11.2007
(51) Int. Cl.: F02C 7/00, F01D 25/00, F01K 23/10, F02C 3/28, F02C 9/00

(54) **GAS TURBINE POWER GENERATION SYSTEM AND METHOD OF DETECTING CALORIFIC ABNORMALITY OF THE SAME**
GASTURBINEN-STROMERZEUGUNGSSYSTEM UND VERFAHREN ZUR ERKENNUNG EINER ABWEICHUNG DES HEIZWERTES
SYSTÈME DE GÉNÉRATION DE PUISSANCE À TURBINE À GAZ ET PROCÉDÉ DE DÉTECTION D'ANOMALIE CALORIFIQUE DU SYSTÈME

(30) Priority: 10.11.2006 JP 2006305325
(43) Date of publication of application: 22.07.2009
(73) Proprietor: Mitsubishi Hitachi Power Systems, Ltd., Yokohama 220-8401 (JP)
(72) Inventor: SONODA, Takashi, Takasago-shi Hyogo 676-8686 (JP); KAMOHARA, Satoru, Takasago-shi Hyogo 676-8686 (JP); TAKASHIMA, Yasuhiro, Takasago-shi Hyogo 676-8686 (JP); KITAGAWA, Yuichiro, Nagasaki-shi Nagasaki 850-8610 (JP); TARUMIZU, Kiyoshi, Mihara-shi Hiroshima 729-0324 (JP)
(74) Representative: Henkel, Breuer & Partner
(86) International application number: PCT/JP2007/071840
(87) International publication number: WO 2008/056790

(56) References cited:
- EP-A1- 0 055 852
- JP-A- 4 088 086
- JP-A- 6 331 131
- JP-A- 04 088 086
- JP-A- 06 331 131
- JP-A- 10 082 330
- JP-A- 2004 018 703
- US-A- 4 064 699

## Description

### Technical Field

The present invention relates to a gas turbine power generation system and a method of detecting a calorific abnormality thereof.

### Background Art

An integrated coal gasification combined cycle (IGCC) system, which is a combination of a coal gasification furnace, a gas turbine facility, and a steam turbine facility, has been conventionally known (for example, see Patent Document 1).

In such an IGCC, the coal gasification furnace and the gas turbine are directly connected to each other through a gas purification facility. Consequently, the produced gas generated in the coal gasification furnace is directly used as fuel of the gas turbine, and therefore a calorific value variation occurring in the fuel gas generated in the coal gasification furnace appears directly as a variation of the output of the gas turbine.

Patent Document 1: Japanese Unexamined Patent Application, Publication No. Hei 6-288262

EP 0 055 852 A1 discloses a method and an apparatus for controlling combustion of gasified fuel. In combustion of gasified fuel by gasifying a low quality fuel and combusting the gasified fuel in a combustor, combustion of gasified fuel is controlled by sampling the gasified fuel at a constant flow rate at the upstream side of the combustor, combusting the sampled gasified fuel, detecting an overall energy level of sensible heat and heating value possessed per unit weight of the gasified fuel on the basis of the combustion temperature of the sampled gasified fuel, and controlling the flow rate of gasified fuel to be led to the combustor in accordance with a fluctuation in the detected overall energy level. Unstable combustion due to a fluctuation in the heating value of the gasified fuel and blow-out due to deficiency of the heating value can be prevented.

US 4 064 699 A discloses a boiler control regulating the input fuel and air to satisfy load demand. Simultaneously, the air flow is adjusted by an air flow control to correct for changes in fuel heating value by means of a circuit which operates in response to outlet steam flow and input mass fuel flow to determine the difference in presumed heat input and actual heat output and, by inference from the heat imbalance or error, a change in fuel heating value. The heat error is used to adjust the air flow demand to the air flow control. In another embodiment, boiler heat pickup is derived to remove from the heat imbalance any heat input changes other than fuel heating value changes.

### Disclosure of Invention

When a by-product gas is charged as fuel for a gas turbine, a calorimeter is provided in advance, and the range of variation of calorific value is determined based on detection values from this calorimeter. With this, a calorific abnormality is detected.

However, measurement devices such as the calorimeter are expensive and are therefore obstacles for reducing cost.

The present invention has been made for solving the above-mentioned problems, and it is an object thereof to provide an integrated coal gasification combined cycle system that can detect a variation in calorific value using existing measured values, without using a measuring device such as a calorimeter, and a method of detecting a calorific abnormality of the system.

In order to solve the above-mentioned problems, there is provided a method of detecting a calorific abnormality of a gas turbine power generation system as set out in independent claim 1, a method of detecting a calorific abnormality of an integrated coal gasification combined cycle system, as set out in independent claim 4, a method of detecting a calorific abnormality of an integrated coal gasification combined cycle system as set out in independent claim 5, a gas turbine power generation system as set out in independent claim 7, an integrated coal gasification combined cycle system as set out in independent claim 8, and an integrated coal gasification combined cycle system as set out in independent claim 9. Advantageous developments are defined in the dependent claims.

According to a first aspect of the present invention, there is provided a method of detecting a calorific abnormality of a gas turbine power generation system as set out in independent claim 1.

In the gas turbine power generation system, when the fuel gas calorific value is set constant, there is a predetermined relation between the power generation output of the gas turbine and the fuel flow charged to a combustor. Therefore, using this relation, an allowable variation range of the fuel flow with respect to the power generation output of the gas turbine or an allowable variation range of the power generation output of the gas turbine with respect to the fuel flow is defined, which makes it possible to detect a calorific abnormality by determining whether an actually charged fuel amount or an actual power generation output of the gas turbine falls outside the allowable variation range or not.

According to such a method, a calorific abnormality is detected using measured values and the like that are used in existing systems. Consequently, a calorific abnormality can be detected with a simple configuration, without using a measuring device such as a calorimeter.

Furthermore, there is provided the method as set out in dependent claim 2.

Since the low-calorific-value abnormality and the high-calorific-value abnormality are detected by whether or not an actually charged fuel amount or an actual power generation output of the gas turbine is lower than the lower limit value or higher than the upper limit value of the allowable variation range, respectively, the details of the calorific abnormality can be understood.

Furthermore, there is provided the method as set out in dependent claim 3.

According to a second aspect of the present invention there is provided a method of detecting a calorific abnormality of an integrated coal gasification combined cycle system as set out in independent claim 4.

In the coal gasification of the IGCC, in order to adjust the fuel gas calorific value to a target calorific value, the flow rates of char, air, coal, and oxygen charged to the gasification furnace are each controlled by feedback. When it is assumed that the calorific value of fuel gas thus generated is in agreement with a target calorific value, there is a predetermined relation between a flow rate of char, air, coal, and oxygen charged to the coal gasification furnace and a power generation output of gas turbine. Therefore, a calorific abnormality of fuel gas can be easily detected by detecting a disruption in the relation (balance) between the flow rate of at least one of the elements and the power generation output of the gas turbine. Thus, a calorific abnormality is detected using measured values and the like that are used in existing IGCCs. Consequently, a calorific abnormality of fuel gas can be easily detected by calculation, without using a measuring device such as a calorimeter.

According to a third aspect of the present invention, there is provided a method of detecting a calorific abnormality of an integrated coal gasification combined cycle system as set out in independent claim 5.

In the IGCC, in order to adjust the calorific value of fuel gas in the coal gasification furnace to a target calorific value, the charged amounts of,coal, oxygen, char, and air are controlled by feedback. On this occasion, the fuel gas calorific value varies when the actual flow rate of charged coal, oxygen, char, or air deviates from the respective target charging amounts by a predetermined value or more.

Accordingly, a calorific abnormality can be easily detected by determining a difference between a target flow rate of at least one of the variation factors and an actual flow rate and determining whether this difference falls outside a previously determined appropriate range or not.

In this case, a calorific abnormality is detected using measured values and the like that are used in existing IGCCs. Consequently, a calorific abnormality of fuel gas can be easily detected by calculation, without using a measuring device such as a calorimeter.

Furthermore, there is provided the method as set out in dependent claim 6.

According to a fourth aspect of the present invention, there is provided a gas turbine power generation system as set out in independent claim 7.

According to a fifth aspect of the present invention, there is provided an integrated coal gasification combined cycle system as set out in independent claim 8.

According to a sixth aspect of the present invention, there is provided an integrated coal gasification combined cycle system as set out in independent claim 9.

In addition, the above-described aspects can be used in any combination that is possible.

The present invention provides an advantage in that a variation in calorific value can be detected using existing measured values, without using a measuring device such as a calorimeter.

### Brief Description of Drawings

[FIG. 1] FIG. 1 is a diagram illustrating a schematic configuration of the entire IGCC according to a first embodiment of the present invention.
[FIG. 2] FIG. 2 is a diagram illustrating fuel amount control in the gas turbine facility shown in FIG. 1.
[FIG. 3] FIG. 3 is a graph showing the relation between a gas turbine power generation output and a fuel flow control signal when the fuel gas calorific value is adjusted to a target calorific value.
[FIG. 4] FIG. 4 is a block diagram illustrating a configuration example of a calorific abnormality detection device according to the first embodiment of the present invention.
[FIG. 5] FIG. 5 is a graph showing the relation between a charged char amount and a gas turbine power generation output when the fuel gas calorific value is set to a target calorific value.
[FIG. 6] FIG. 6 is a block diagram illustrating a configuration example of a calorific abnormality detection device when a calorific abnormality is detected based on a charged char amount.
[FIG. 7] FIG. 7 is a graph showing the relation between a charged coal amount and an air flow rate when the fuel gas calorific value is adjusted to a target calorific value.
[FIG. 8] FIG. 8 is a block diagram illustrating a configuration example of a calorific abnormality detection device when a calorific abnormality is detected based on an air ratio.
[FIG. 9] FIG. 9 is a graph showing the relation between an air flow rate and a charged coal amount when the fuel gas calorific value is adjusted to a target calorific value.
[FIG. 10] FIG. 10 is a block diagram illustrating a configuration example of a calorific abnormality detection device when a calorific abnormality is detected based on an air ratio.
[FIG. 11] FIG. 11 is a block diagram illustrating a configuration example of a calorific abnormality detection device when a calorific abnormality is detected based on a difference between a charged coal amount and a target coal amount to be charged.
[FIG. 12] FIG. 12 is a block diagram illustrating a configuration example of a calorific abnormality detection device when a calorific abnormality is detected based on a difference between an actual air flow rate and a target air flow rate.
[FIG. 13] FIG. 13 is a block diagram illustrating a configuration example of a calorific abnormality detection device when a calorific abnormality is detected based on a difference between an actual oxygen flow rate and a target oxygen flow rate.
[FIG. 14] FIG. 14 is a block diagram illustrating a configuration example of a calorific abnormality detection device when a calorific abnormality is detected based on a difference between an actually charged char amount and a target char amount to be charged.
[FIG. 15] FIG. 15 is a block diagram illustrating another configuration example of the calorific abnormality detection device shown in FIG. 4.

### Explanation of Reference Signs:

1: integrated coal gasification combined cycle system
3: coal gasification furnace
5: gas turbine facility
5a: combustor
5b: gas turbine
20: char-recovery device
50: fuel flow control device
61: regulation valve
62: flow rate gauge
G: generator

### Best Mode for Carrying Out the Invention

### [First embodiment]

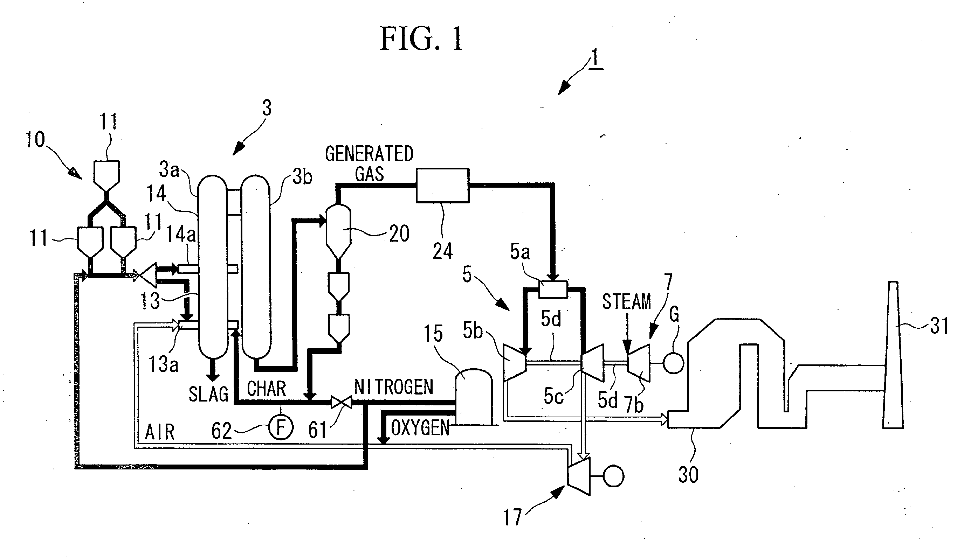

An integrated coal gasification combined cycle system according to a first embodiment of the present invention will be described with reference to FIG. 1.

As shown in FIG. 1, the integrated coal gasification combined cycle (IGCC) system 1, using coal as fuel, according to this embodiment mainly includes a coal gasification furnace 3, a gas turbine facility 5, a steam turbine facility 7, and an exhaust heat recovery boiler (HRSG) 30.

A coal supplying facility 10 for supplying powdered coal to the coal gasification furnace 3 is disposed upstream of the coal gasification furnace 3. This coal supplying facility 10 includes a pulverizer (not shown) for pulverizing coal as raw material to powdered coal of several micrometers to several hundred micrometers in size. The powdered coal pulverized by this pulverizer is reserved in a plurality of hoppers 11.

The powdered coal reserved in each hopper 11 is fed to the coal gasification furnace 3 together with nitrogen supplied from an air separation device 15 at a predetermined flow rate.

The coal gasification furnace 3 includes a coal gasification portion 3a formed such that gas is forced to flow from the lower side to the upper side and a heat exchanging portion 3b connected downstream of the coal gasification portion 3a and formed such that gas is forced to flow from the upper side to the lower side.

The coal gasification portion 3a is provided with, from the lower side, a combustor 13 and a reductor 14. The combustor 13 is a portion for burning parts of powdered coal and char and thermally decomposing the residues and releasing them as volatile materials (CO, H₂, and lower hydrocarbons). The combustor 13 employs an entrained bed, but may be a fluidized-bed type or a fixed-bed type.

The combustor 13 and the reductor 14 are provided with a combustor burner 13a and a reductor burner 14a, respectively. These burners 13a and 14a are supplied with powdered coal from the coal supplying facility 10.

The combustor burner 13a is configured to be supplied with air from an air pressure-raising device 17 together with oxygen separated in an air separator 15, as a gasifying agent. Thus, the combustor burner 13a is supplied with air whose oxygen content is regulated.

In the reductor 14, powdered coal is gasified by the high-temperature combustion gas from the combustor 13. With this, combustible gas serving as gas fuel such as CO or H₂ is generated from coal. The coal gasification reaction is an endothermic reaction generating CO or H₂ by the reaction of carbon in the powdered coal and char with CO₂ and H₂O in the high-temperature gas.

A plurality of heat exchangers (not shown) are installed in the heat exchanging portion 3b of the coal gasification furnace 3 to generate steam by obtaining sensible heat from the gas introduced from the reductor 14. The steam generated in the heat exchangers is mainly used for driving a steam turbine 7b. The gas passed through the heat exchanging portion 3b is introduced to a char-recovery device 20. This char-recovery device 20 includes a porous filter, and char mixed in the gas is recovered by being trapped by the filter when the gas passes through. The trapped char deposits in the porous filter and forms a char layer. In the char layer, Na and K contained in the gas are condensed, and, as a result, Na and K are also removed in the char-recovery device 20.

The thus recovered char is sent back to the combustor burner 13a of the coal gasification furnace 3 for reuse together with nitrogen separated in the air separation device 15. Na and K sent back to the combustor burner 13a together with the char are finally discharged from the lower side of the coal gasification portion 3a together with cinders of melted powdered coal. The melted and discharged cinders are quenched with water and crushed into glass-like slag. The piping for transferring nitrogen outputted from the air separation device 15 is provided with a regulation valve 61 for regulating the amount of nitrogen supplied to the combustor burner 13a. Furthermore, the piping for transferring char is provided with a flow rate gauge 62 detecting the flow rate of the char.

The gas passed through the char-recovery device 20 is sent to a combustor 5a of the gas turbine facility 5 as fuel gas via a gas purification facility 24 which is a facility for dedusting and desulfurization.

The gas turbine facility 5 includes the combustor 5a for burning gasified fuel, a gas turbine 5b driven by the fuel gas, and a turbo compressor 5c for supplying high-pressure air to the combustor 5a. The gas turbine 5b and the turbo compressor 5c are connected to each other via a rotary shaft 5d. Air compressed in the turbo compressor 5c is also introduced to the air pressure-raising device 17, aside from the combustor 5a.

The combustion exhaust gas passed through the steam gas turbine 5b is introduced to the exhaust heat recovery boiler 30.

The steam turbine 7b of the steam turbine facility 7 is connected to the same rotary shaft 5d as that of the gas turbine facility 5 to configure a so-called single-shaft combined system. The steam turbine 7b is supplied with high-pressure steam from the coal gasification furnace 3 and the exhaust heat recovery boiler 30. It is not limited to a single-shaft combined system; a separate-shaft combined system may also be employed.

A generator G outputting electricity from the rotary shaft 5d driven by the gas turbine 5b and the steam turbine 7b is disposed at the opposite side of the gas turbine facility 5, with the steam turbine facility 7 therebetween. The arrangement position of the generator is not limited to this position and may be any position that allows obtaining power generation output from the rotary shaft 5d.

The exhaust heat recovery boiler 30 generates steam with the combustion exhaust gas from the gas turbine 5b and also releases the combustion exhaust gas to the atmosphere from a chimney 35.

The operation of the integrated coal gasification combined cycle system 1 with the above-mentioned configuration will be described.

Coal as raw material is pulverized with a pulverizer (not shown) and is introduced to the hoppers 11 and reserved. The powdered coal reserved in the hoppers 11 is supplied to the reductor burner 14a and the combustor burner 13a together with nitrogen separated in the air separation device 15. Furthermore, the combustor burner 13a is supplied with not only powdered coal but also char recovered in the char-recovery device 20.

Air that is prepared by further raising the pressure of compressed air bled from the turbo compressor 5c of the gas turbine facility 5 with the air pressure-raising device 17 and adding oxygen separated in the air separation device 15 to the resulting pressure-raised air is used as the combustion gas of the combustor burner 13a. In the combustor 13, powdered coal and char are partially burned with the combustion air, and the residue is thermally decomposed to volatile materials (CO, H₂, and lower hydrocarbons).

In the reductor 14, powdered coal that is supplied from the reductor burner 14a and char that has released volatile materials in the combustor 13 are gasified by high-temperature gas rising from the combustor 13 to generate combustible gas such as CO or H₂.

The gas passed through the reductor 14 gives sensible heat to the heat exchangers while passing through the heat exchanging portion 3b of the coal gasification furnace 3 and generates steam. The steam generated in the heat exchanging portion 3b is mainly used for driving the steam turbine 7b.

The gas passed through the heat exchanging portion 3b is introduced to the char-recovery device 20 for recovering char. Na and K in the gas are condensed here and taken into char. The char containing the Na and the K is sent back to the coal gasification furnace 3.

The gas passed through the char-recovery device 20 is introduced to the combustor 5a of the gas turbine facility 5 and is burned together with the compressed air supplied from the turbo compressor 5c. With this combustion gas, the gas turbine 5b is rotated, and the rotary shaft 5d is driven.

The combustion exhaust gas passed through the gas turbine 5b is introduced to the exhaust heat recovery boiler 30, and steam is generated using the sensible heat of this combustion exhaust gas. The steam generated in the exhaust heat recovery boiler 30 is mainly used for driving the steam turbine 7b.

The steam turbine 7b is rotated by steam from the coal gasification furnace 3 and steam from the exhaust heat recovery boiler 30 and drives the same rotary shaft 5d as that of the gas turbine facility 5. The torque of the rotary shaft 5d is converted to power generation output by the generator G.

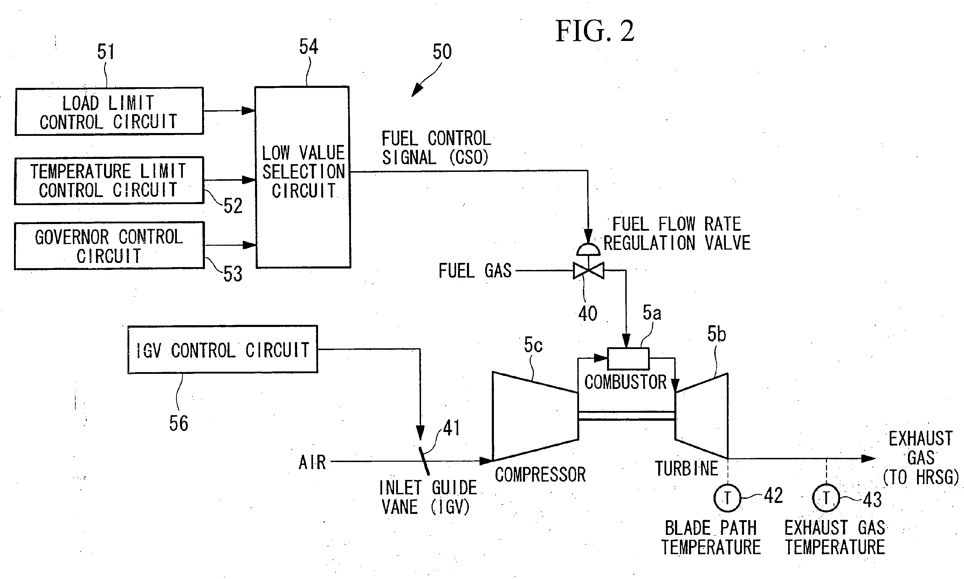

General control of fuel flow of the gas turbine facility in the above-described IGCC will be described with reference to FIG. 2.

As shown in FIG. 2, fuel piping supplying fuel gas to the combustor 5a is provided with a fuel flow regulation valve 40 for regulating the fuel flow. The degree of opening of this fuel flow regulation valve 40 is controlled by a fuel flow control device 50. An air piping supplying air to the turbo compressor 5c is provided with an air flow rate regulation valve (hereinafter, referred to as "IGV regulation valve") 41 for regulating the air flow rate. The degree of opening of this air flow rate regulation valve 41 is regulated by an IGV control circuit 56.

A BPT (Blade Path Temperature) sensor 42 for measuring the exhaust gas temperature of the gas turbine 5b (hereinafter, referred to as "blade path temperature") is disposed near the gas turbine 5b. In addition, an EXT sensor 43 for measuring the exhaust gas temperature at a ventilation duct (hereinafter, referred to as "exhaust gas temperature") is disposed in the exhaust gas channel where the BPT sensor 42 is disposed at the further downstream side of the BPT sensor 42. These sensors may be used, for example, thermocouples. The temperature measured with the BPT sensor 42 and the EXT sensor 43 is given to the fuel flow control device 50.

The fuel flow control device 50 acquires state quantities relating to an operation state and a temperature state of the gas turbine as input signals and calculates a fuel flow command for controlling the fuel flow supplied to the combustor 5a based on these input signals. The above-mentioned state quantities relating to the operation state are, for example, an output of the generator G (see FIG. 1) and a rotation velocity or rotation frequency of the gas turbine 5b. The state quantities relating to the temperature state are, for example, an exhaust gas temperature and a blade path temperature.

The fuel flow control device 50 is configured by including, for example, a load limit control circuit 51, a temperature limit control circuit 52, a governor control circuit 53, and a low value selection circuit 54.

The load limit control circuit 51 acquires, for example, the power generation output as an input signal and calculates a load control signal controlling the fuel flow such that the power generation output coincides with a target value.

The temperature limit control circuit 52 acquires the blade path temperature BPT and the exhaust gas temperature EXT of the gas turbine 5bas input signals and calculates temperature control signals controlling fuel flows such that these temperatures do not exceed the respective temperature upper limits.

The governor control circuit 53 acquires the rotation velocity or rotation frequency of the gas turbine 5b as an input signal and calculates a governor control signal controlling a fuel flow such that the rotation velocity or rotation frequency of the gas turbine 5b coincides with a target value.

All of the control signals calculated by the load limit control circuit 51, the temperature limit control circuit 52, and the governor control circuit 53 are given to the low value selection circuit 54. The low value selection circuit 54 selects a control signal with the lowest value among these control signals and outputs the selected control signal as a fuel control signal CSO.

The fuel control signal CSO thus obtained by the fuel flow control device 50 is given to the fuel flow regulation valve 40, and the degree of opening of the fuel flow regulation valve 40 is regulated based on this fuel control signal CSO, followed by supplying fuel to the combustor 5a at an optimum flow rate.

A method of detecting a calorific abnormality of the IGCC according to this embodiment will be described.

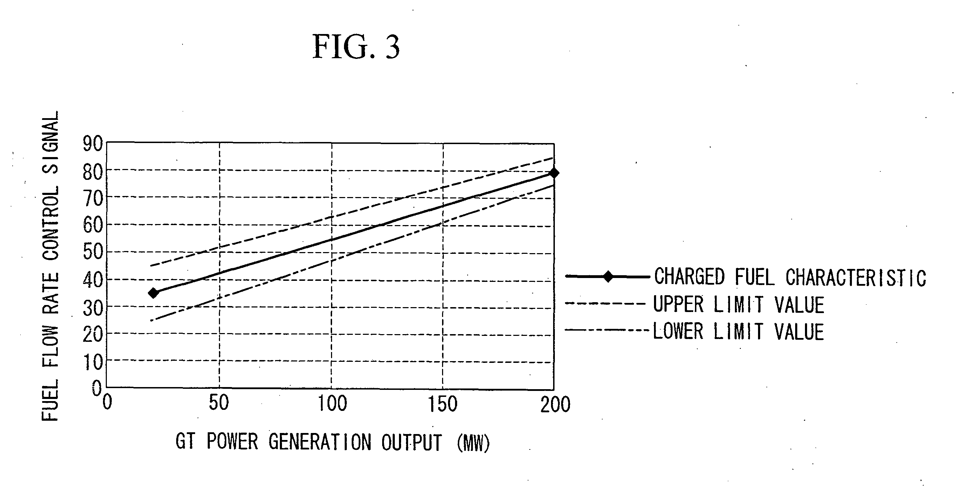

First, in the calorific-value control of fuel gas of the IGCC, a target calorific value is set, and charging amounts of char, oxygen, coal, and air charged to the coal gasification furnace are controlled such that fuel gas with the target calorific value is generated. When it is assumed that the calorific value of fuel gas charged to the combustor 5a coincides with the target calorific value, there is a relation as shown in FIG. 3 between the charged fuel amount to the combustor 5a and the power generation output of the gas turbine.

In FIG. 3, the horizontal axis indicates the power generation output of the gas turbine, and the vertical axis indicates the fuel flow signal CSO. Furthermore, as shown in FIG. 1, the IGCC according to this embodiment is a so-called single-shaft combined system. In such a case, the value obtained by subtracting a power generation output by the steam turbine 7b from an output of the generator G is the power generation output of the gas turbine.

In FIG. 3, the solid line shows a gas turbine power generation output vs. charged fuel amount characteristic (hereinafter, referred to as "charged fuel characteristic") when the fuel gas calorific value is adjusted to a target calorific value, and the dotted lines at the lower side and the upper side of this characteristic show the lower limit value and the upper limit value of an allowable variation range of the calorific-value variation, respectively.

Furthermore, in FIG. 3, the vertical axis may be, for example, a control amount that has a correlation with the fuel amount charged to the combustor 5a. For example, an operation signal to the fuel flow regulation valve 40, a degree of opening of the fuel flow regulation valve 40, or the charged fuel amount itself may be employed.

In the IGCC, when the fuel gas calorific value is decreased lower than a target calorific value, since a desired power generation output of the gas turbine is not obtained even if the fuel gas is charged to the combustor 5a at a target flow rate obtained from the gas turbine power generation output, the fuel flow is increased to deviate upward from the allowable variation range shown in FIG. 3. Conversely, when the fuel gas calorific value is increased higher than a target calorific value, since a large amount of power generation output is obtained with a small amount of fuel, the fuel flow is decreased to deviate downward from the allowable variation range shown in FIG. 3.

With such a relation, in this embodiment, information about the fuel amount actually charged to the combustor 5a, such as a fuel control signal CSO, is monitored, and when a relation of this fuel control signal CSO with the gas turbine power generation output at that time falls outside the allowable variation range shown in FIG. 3, a calorific abnormality is detected.

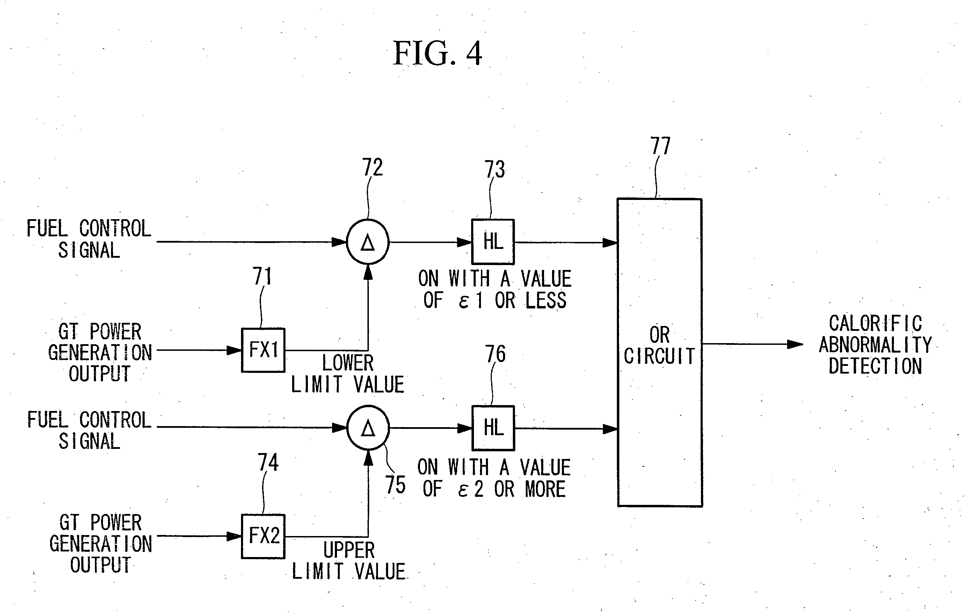

FIG. 4 shows a configuration example of a calorific abnormality detection device (hereinafter, referred to as "calorific abnormality detection device") for achieving the above-mentioned method of detecting a calorific abnormality.

As shown in FIG. 4, the calorific abnormality detection device includes a first function unit 71 receiving an actual power generation output and calculating a lower limit value of the fuel control signal CSO based on this received input information, a subtractor 72 calculating a difference between the lower limit value that is the output from the first function unit 71 and the actual fuel control signal CSO, a comparator 73 outputting a signal "H" when the output from the subtractor 72 is not higher than a threshold ε1, a second function unit 74 receiving an actual power generation output of the gas turbine and calculating an upper limit value of the fuel control signal CSO based on this received input information, a subtractor 75 calculating a difference between the upper limit value that is the output from the second function unit 74 and the actual fuel control signal CSO, a comparator 76 outputting a signal "H" when the output from the subtractor 75 is not lower than a threshold ε2, and an OR circuit 77 receiving outputs from the comparator 73 and the comparator 76 and outputting a signal "H" when at least one of the outputs is the signal "H". In this calorific abnormality detection device, when the output from the OR circuit 77 is "H", it indicates the occurrence of a calorific abnormality.

As has been described above, in the IGCC and the method of detecting a calorific abnormality according to this embodiment, since a calorific abnormality is detected using existing control amounts, calorimeters are unnecessary, resulting in a decrease in cost.

### [Second Embodiment]

An IGCC according to a second embodiment of the present invention and a method of detecting a calorific abnormality thereof will be described.

In the coal gasification furnace 3 of the IGCC, in order to adjust the calorific value of fuel gas to a target calorific value, the flow rate of each element, such as char, air, coal, and oxygen, that is charged to the coal gasification furnace 3 is controlled by feedback. Accordingly, if these flow rates deviate from the respective target flow rates, the calorific value of the fuel gas varies.

Specifically, in char, coal, and oxygen, the fuel gas calorific value increases when the flow rate is larger than a target flow rate. On the other hand, in air, the fuel gas calorific value decreases when the flow rate is larger than a target flow rate.

Consequently, in the second embodiment, a calorific abnormality is detected based on the charging amounts of calorific-value variation factors of char, air, coal, and oxygen, etc.

### (Detection based on charged char amount)

A case where a calorific abnormality is detected based on a charged char amount will be described.

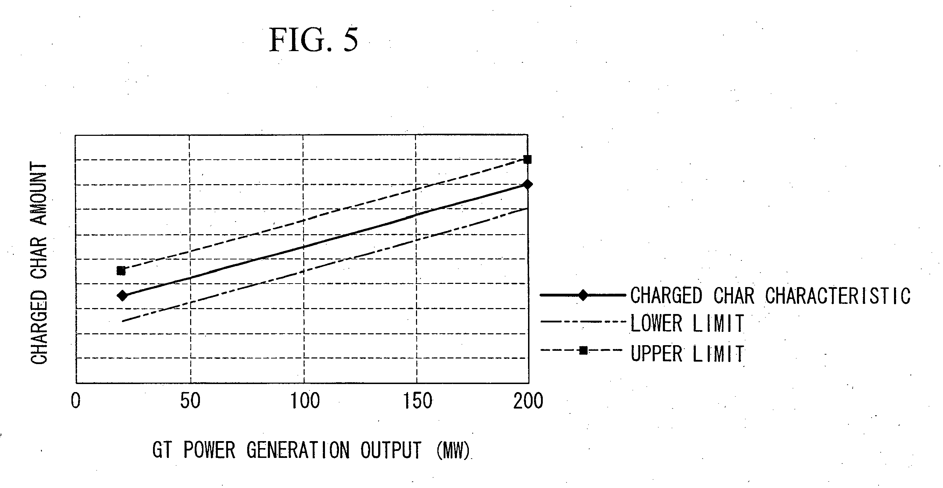

In the calorific-value control of fuel gas in the IGCC, a target calorific value is determined, and the charging char amount is controlled so that the target calorific value is achieved. When it is assumed that the calorific value of fuel gas charged to the combustor 5a coincides with the target calorific value, there is a relation as shown in FIG. 5 between the charged char amount and the power generation output of the gas turbine 5b.

In FIG. 5, the horizontal axis indicates the power generation output of the gas turbine 5b, and the vertical axis indicates the char amount charged to the coal gasification furnace 3. In FIG. 5, the solid line shows a gas turbine power generation output vs. charged char amount characteristic (hereinafter, referred to as "charged char characteristic") at a target calorific value, the two-dot chain line at the lower side of this characteristic shows the lower limit value of an allowable variation range, and the dotted line at the upper side of this characteristic shows the upper limit value of the allowable variation range.

The charged char amount can be detected with, for example, a flow rate gauge 62 (see FIG. 1) provided in piping for transferring char.

When the char amount charged to the coal gasification furnace 3 is decreased to a level lower than a target charging amount due to clogging of, for example, the piping for transferring char to the coal gasification furnace 3, the calorific value of the fuel gas is decreased. Therefore, even if a predetermined amount of fuel is charged to the combustor 5a, the corresponding desired power generation output of the gas turbine is not achieved, resulting in an increase of the charging fuel amount. Accordingly, in this case, a downward deviation from the allowable variation range shown in FIG. 5 occurs. Conversely, when the char amount charged to the coal gasification furnace 3 is increased to a level higher than a target charging amount, the calorific value of fuel gas is increased. Therefore, a large amount of power generation output is obtained with a small amount of fuel. In this case, an upward deviation from the allowable variation range shown in FIG. 5 occurs.

For this reason, in the detection of a calorific abnormality of fuel gas, when the relation between the char amount charged to the coal gasification furnace 3 and the power generation output of the gas turbine falls outside the allowable variation range shown in FIG. 5, a calorific abnormality is detected.

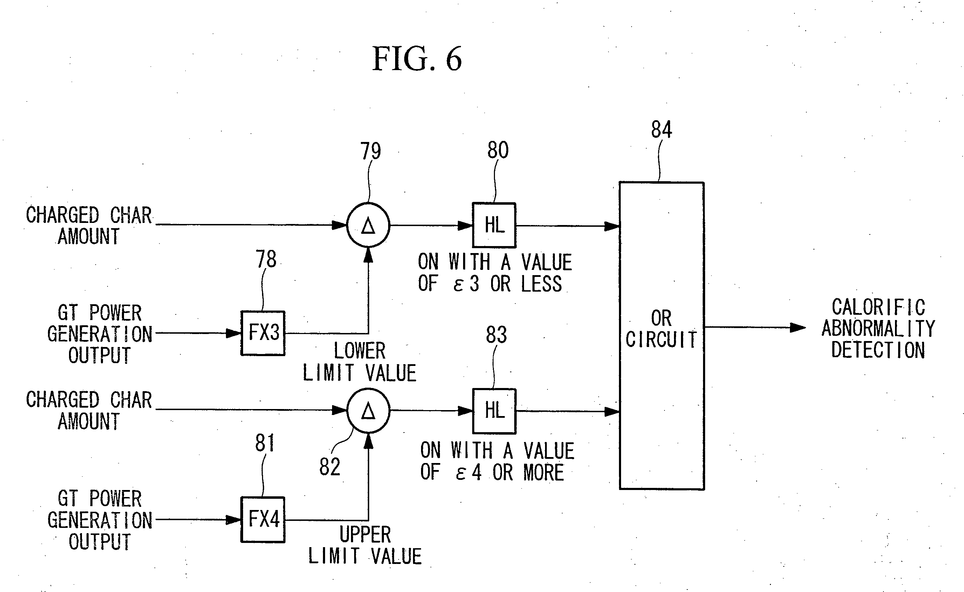

FIG. 6 shows a configuration example of a calorific abnormality detection device for realizing the above-mentioned method of detecting a calorific abnormality.

As shown in FIG. 6, the calorific abnormality detection device includes a third function unit 78 receiving an actual power generation output of the gas turbine and calculating a lower limit value of the charging char amount based on this received input information, a subtractor 79 calculating a difference between the lower limit value that is the output from the third function unit 78 and the actually charged char amount, a comparator 80 outputting a signal "H" when the output from the subtractor 79 is not higher than a threshold ε3, a fourth function unit 81 receiving an actual power generation output of the gas turbine and calculating an upper limit value of the charging char amount based on this received input information, a subtractor 82 calculating a difference between the upper limit value that is the output from the fourth function unit 81 and the actually charged char amount, a comparator 83 outputting a signal "H" when the output from the subtractor 82 is not lower than a threshold ε4, and an OR circuit 84 receiving outputs from the comparator 80 and the comparator 83 and outputting a signal "H" when either of the outputs is the signal "H". In this calorific abnormality detection device, a calorific abnormality is detected when the output from the OR circuit 84 is "H".

### (Detection based on ratio of fuel (coal) and air (including oxygen)

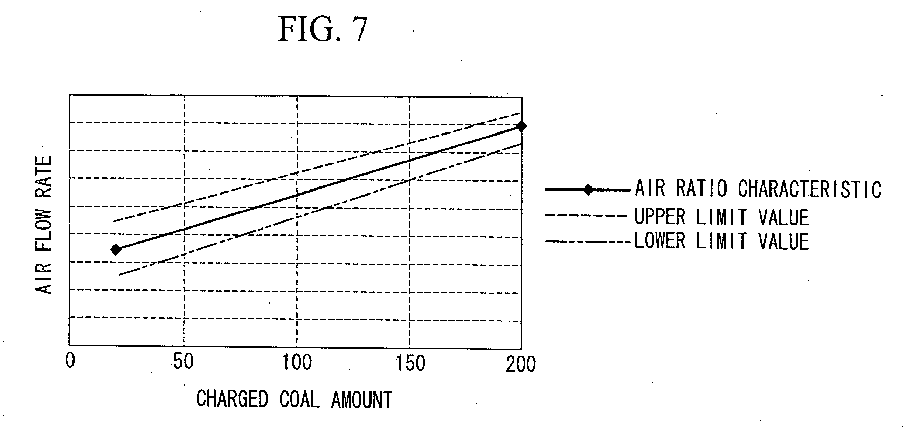

One factor that causes a variation in the calorific value of fuel gas generated in the coal gasification furnace 3 is an irregular ratio of charging fuel (coal) to air (including oxygen). If the calorific value of fuel gas generated in the coal gasification furnace 3 is as planned, the ratio of the fuel and the air (hereinafter, referred to as "air ratio") has a predetermined relation as shown in FIG. 7. A calorific abnormality of the fuel gas is detected based on the degree of this irregular relation.

In FIG. 7, the horizontal axis indicates the charged coal amount, and the vertical axis indicates the air flow rate. In FIG. 7, the solid line shows a charged coal amount vs. air flow rate characteristic (hereinafter, referred to as "air ratio characteristic") at a target calorific value, and the two-dot chain line at the lower side of this characteristic shows the lower limit value of an allowable variation range, and the dotted line at the upper side of this characteristic shows the upper limit value of the allowable variation range.

When the coal amount charged to the coal gasification furnace 3 is decreased or when the air flow rate is increased, the calorific value of fuel gas is decreased, and an upward deviation from the allowable variation range shown in FIG. 7 occurs. Conversely, when the coal amount charged to the coal gasification furnace 3 is increased or when the air flow rate is decreased, the calorific value of fuel gas is increased, and a downward deviation from the allowable variation range shown in FIG. 7 occurs.

For this reason, in the detection of a calorific abnormality of fuel gas, when a relation between the fuel amount charged to the coal gasification furnace 3 and the air flow rate falls outside the allowable variation range shown in FIG. 7, a calorific abnormality is detected.

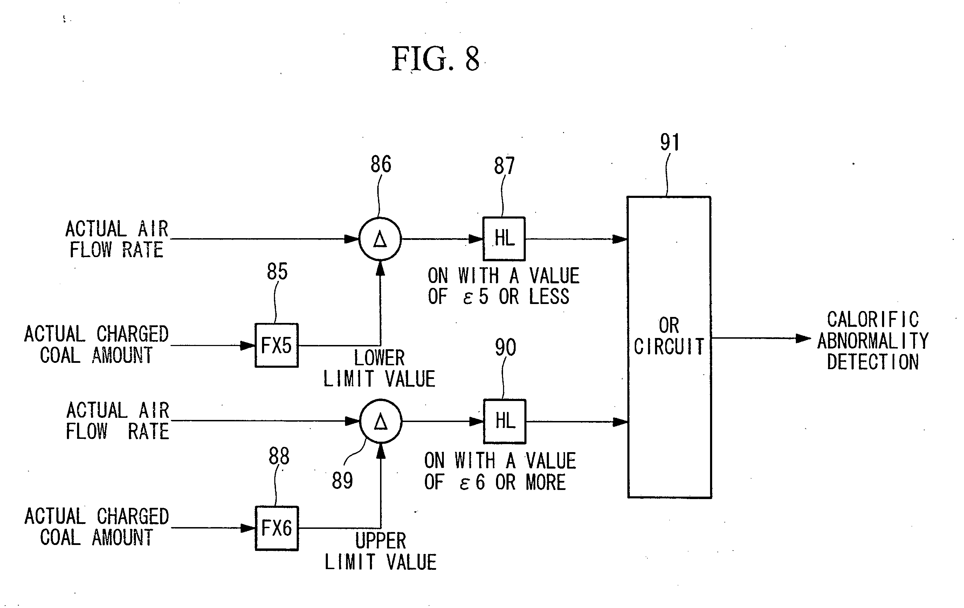

FIG. 8 shows a configuration example of a calorific abnormality detection device for realizing the above-mentioned method of detecting a calorific abnormality.

As shown in FIG. 8, the calorific abnormality detection device includes a fifth function unit 85 receiving an actually charged coal amount and calculating a lower limit value of the air flow rate based on this received input information, a subtractor 86 calculating a difference between the lower limit value that is the output from the fifth function unit 85 and the actual air flow rate, a comparator 87 outputting a signal "H" when the output from the subtractor 86 is not higher than a threshold ε5, a sixth function unit 88 receiving an actually charged coal amount and calculating an upper limit value of the air flow rate based on this received input information, a subtractor 89 calculating a difference between the upper limit value that is the output from the sixth function unit 88 and the actual air flow rate, a comparator 90 outputting a signal "H" when the output from the subtractor 89 is not lower than a threshold ε6, and an OR circuit 91 receiving outputs from the comparator 87 and the comparator 90 and outputting a signal "H" when either of the outputs is the signal "H". In this calorific abnormality detection device, a calorific abnormality is detected when the output from the OR circuit 91 is "H".

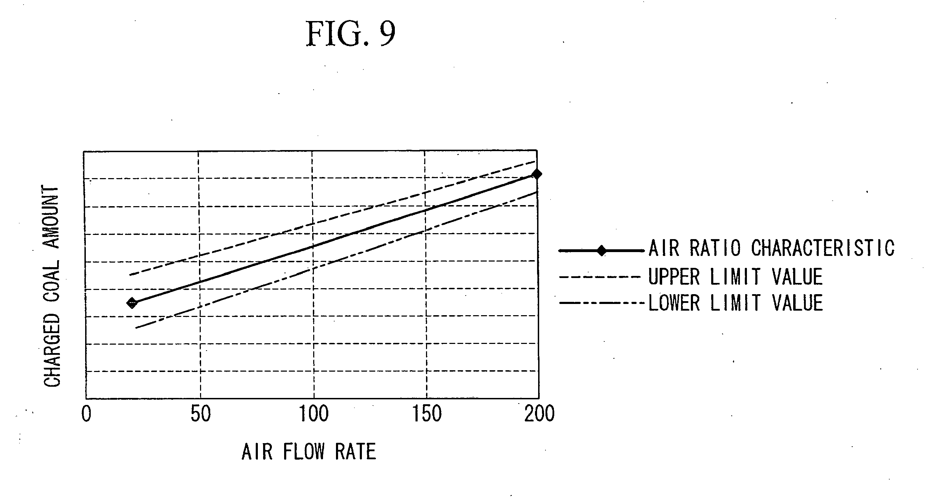

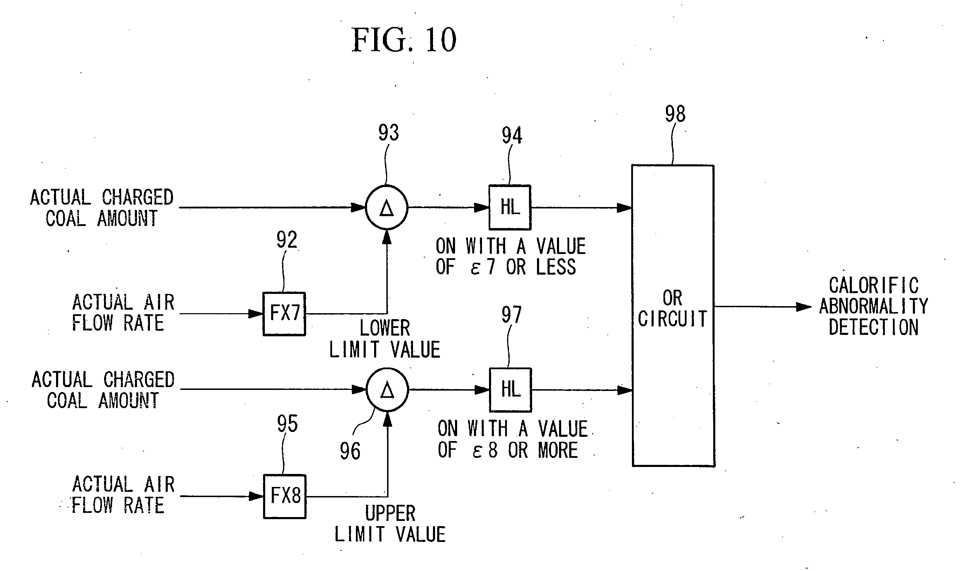

In the above, an allowable variation range of the air flow rate with respect to the charged coal amount is determined by plotting charged coal amounts on the horizontal axis and air flow rates on the vertical axis, and a calorific abnormality is detected by whether an actual air flow rate falls inside this allowable variation range or not. However, as shown in FIGS. 9 and 10, an allowable variation range of the charged coal amount with respect to the air flow rate may be determined by plotting air flow rates on the horizontal axis and charged coal amounts on the vertical axis, and a calorific abnormality may be detected by whether an actually charged coal amount falls inside this allowable variation range or not. The configuration shown in FIG. 10 is different from that shown in FIG. 8 only in that the charged coal amount and the air flow rate are interchanged with each other, and therefore the description is omitted.

Thus, since a calorific abnormality is detected from a relation between the air flow rate and the charged coal amount, the calorific abnormality can be detected at an early stage with a simple configuration.

### (Detection based on difference between charged coal amount and target charging coal amount)

In the IGCC, in order to adjust the calorific value of fuel gas in the coal gasification furnace to a target calorific value, the charging coal amount is controlled by feedback. In this occasion, the calorific value of fuel gas is increased when the flow rate of actually charged coal (hereinafter, referred to as "actual charged coal amount") is larger than a target charging amount (hereinafter, referred to as "target charging coal amount"), and is decreased when the actual amount is smaller than the target amount.

For this reason, a variation in calorific value is detected when a difference between the target charging coal amount and the actual charged coal amount falls outside the allowable variation range.

This makes it possible to detect a calorific abnormality at an early stage with a simple configuration, from a predetermined relation between the actual charged coal amount and the target charging coal amount.

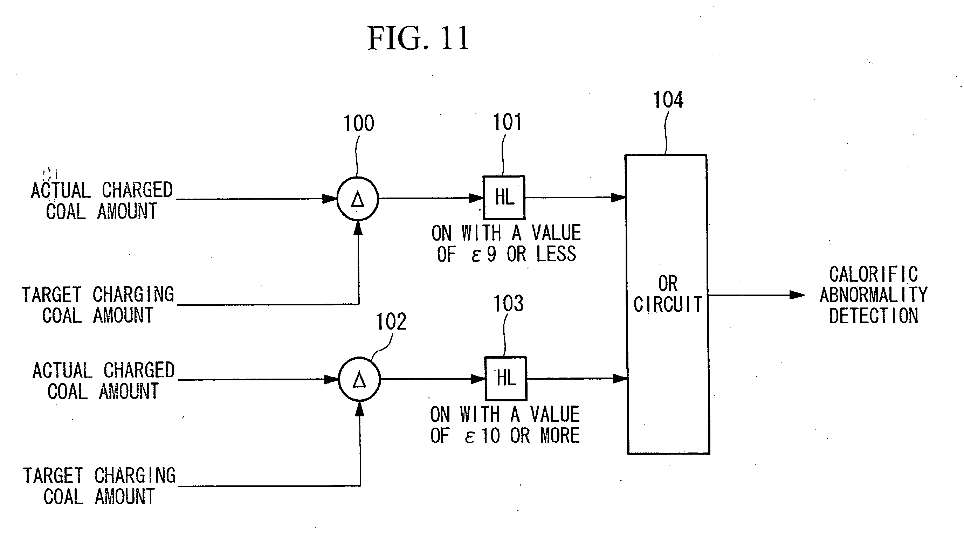

FIG. 11 shows a configuration example of a calorific abnormality detection device for realizing the above-mentioned method of detecting a calorific abnormality.

As shown in FIG. 11, the calorific abnormality detection device includes a subtractor 100 calculating a difference between the actual charged coal amount and the target charging coal amount, a comparator 101 outputting a signal "H" when the output from the subtractor 100 is not higher than a threshold ε9, a subtractor 102 calculating a difference between the actual charged coal amount and the target charging coal amount, a comparator 103 outputting a signal "H" when the output from the subtractor 102 is not lower than a threshold ε10, and an OR circuit 104 receiving outputs from the comparator 101 and the comparator 103 and outputting a signal "H" when at least one of the outputs is the signal "H". In this calorific abnormality detection device, a calorific abnormality is detected when the output from the OR circuit 104 is "H".

Here, the threshold ε9 is set to the lower limit value of the allowable variation range of the difference, and the threshold ε10 is set to the upper limit value of the allowable variation range of the difference.

### (Detection based on difference between actual air flow rate and target air flow rate)

In the IGCC, in order to adjust the calorific value of fuel gas in the coal gasification furnace to a target calorific value, the air flow rate is controlled by feedback. On this occasion, the calorific value of fuel gas is decreased when the flow rate of actually charged air (hereinafter, referred to as "actual air flow rate") is larger than a target air flow rate, and is increased when the actual rate is smaller than the target rate.

For this reason, a variation in calorific value is detected when a difference between the target air flow rate and the actual air flow rate falls outside the allowable variation range.

This makes it possible to detect a calorific abnormality at an early stage with a simple configuration, from a predetermined relation between the air flow rate and the target air flow rate.

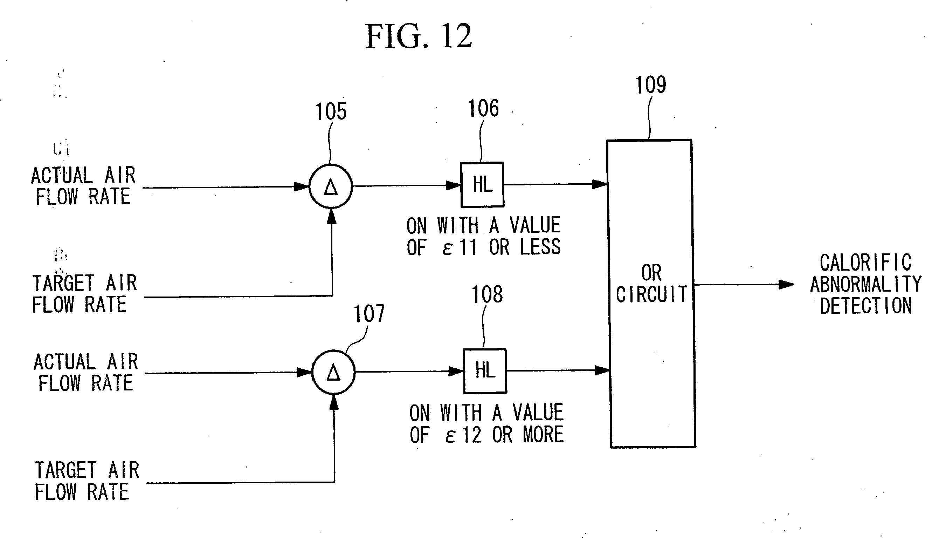

FIG. 12 shows a configuration example of a calorific abnormality detection device for realizing the above-mentioned method of detecting a calorific abnormality.

As shown in FIG. 12, the calorific abnormality detection device includes a subtractor 105 calculating a difference between the actual air flow rate and the target air flow rate, a comparator 106 outputting a signal "H" when the output from the subtractor 105 is not higher than a threshold ε11, a subtractor 107 calculating a difference between the actual air flow rate and the target air flow rate, a comparator 108 outputting a signal "H" when the output from the subtractor 107 is not lower than a threshold ε12, and an OR circuit 109 receiving outputs from the comparator 106 and the comparator 108 and outputting a signal "H" when at least one of the outputs is the signal "H". In this calorific abnormality detection device, a calorific abnormality is detected when the output from the OR circuit 109 is "H". Here, the threshold ε11 is set to the lower limit value of the allowable variation range of the difference, and the threshold ε12 is set to the upper limit value of the allowable variation range of the difference.

### (Detection based on difference between actual oxygen flow rate and target oxygen flow rate)

In the IGCC, in order to adjust the calorific value of fuel gas in the coal gasification furnace to a target calorific value, the oxygen flow rate is controlled by feedback. On this occasion, the calorific value of fuel gas is decreased when the flow rate of actually charged oxygen (hereinafter, referred to as "actual oxygen flow rate") is larger than a target oxygen flow rate, and is increased when the actual rate is smaller than the target rate.

For this reason, a variation in calorific value is detected when a difference between the target oxygen flow rate and the actual oxygen flow rate falls outside the allowable variation range.

This makes it possible to detect a calorific abnormality at an early stage with a simple configuration, from a predetermined relation between the oxygen flow rate and the target oxygen flow rate.

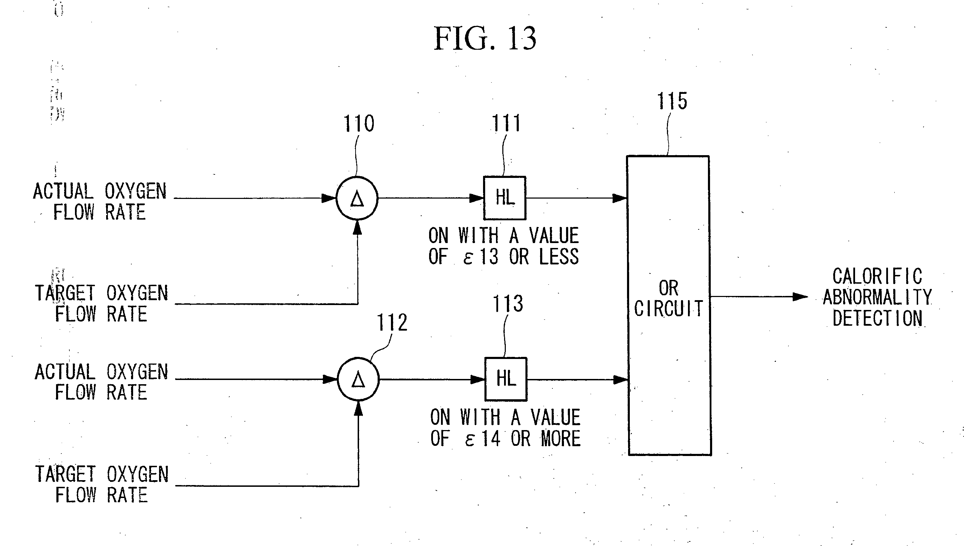

FIG. 13 shows a configuration example of a calorific abnormality detection device for realizing the above-mentioned method of detecting a calorific abnormality.

As shown in FIG. 13, the calorific abnormality detection device includes a subtractor 110 calculating a difference between the actual oxygen flow rate and the target oxygen flow rate, a comparator 111 outputting a signal "H" when the output from the subtractor 110 is not higher than a threshold ε13, a subtractor 112 calculating a difference between the actual oxygen flow rate and the target oxygen flow rate, a comparator 113 outputting a signal "H" when the output from the subtractor 112 is not lower than a threshold ε14, and an OR circuit 115 receiving outputs from the comparator 111 and the comparator 113 and outputting a signal "H" when at least one of the outputs is the signal "H". In this calorific abnormality detection device, a calorific abnormality is detected when the output from the OR circuit 115 is "H". Here, the threshold ε13 is set to the lower limit value of the allowable variation range of the difference, and the threshold ε14 is set to the upper limit value of the allowable variation range of the difference.

### (Detection based on difference between actually charged char amount and target charging char amount)

In the IGCC, in order to adjust the calorific value of fuel gas in the coal gasification furnace to a target calorific value, the charging amount of char is controlled by feedback. In this occasion, the calorific value of fuel gas is increased when the flow rate of actually charged char (hereinafter, referred to as "actual charged char amount") is larger than a target charging char amount, and is decreased when the actual charged amount is smaller than the target amount.

For this reason, a variation in calorific value is detected when a difference between the target charging char amount and the actual charged char amount falls outside the allowable variation range.

This makes it possible to detect a calorific abnormality at an early stage with a simple configuration, from a predetermined relation between the actual charged char amount and the target charging char amount.

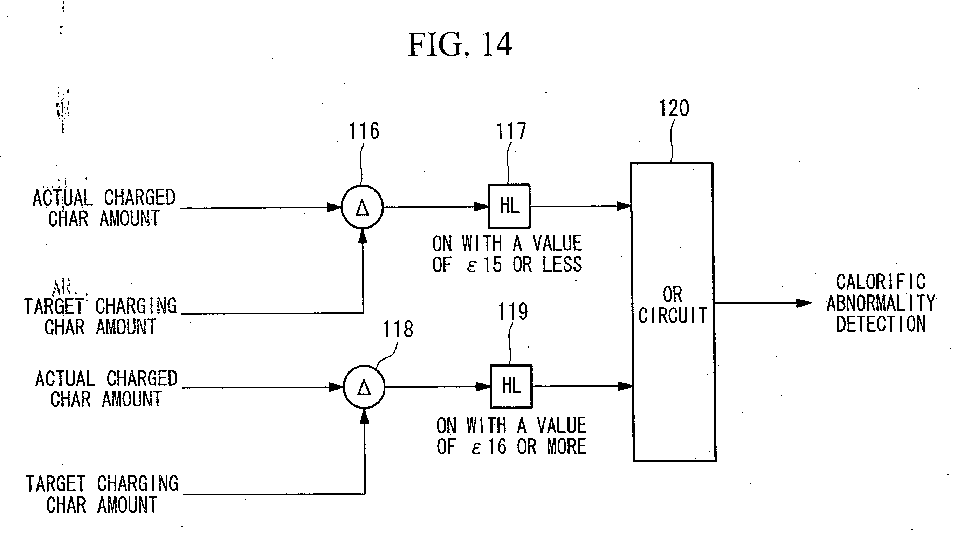

FIG. 14 shows a configuration example of a calorific abnormality detection device for realizing the above-mentioned method of detecting a calorific abnormality.

As shown in FIG. 14, the calorific abnormality detection device includes a subtractor 116 calculating a difference between the actual charged char amount and the target charging char amount, a comparator 117 outputting a signal "H" when the output from the subtractor 116 is not higher than a threshold ε15, a subtractor 118 calculating a difference between the actual charged char amount and the target charging char amount, a comparator 119 outputting a signal "H" when the output from the subtractor 118 is not lower than a threshold ε16, and an OR circuit 120 receiving outputs from the comparator 117 and the comparator 119 and outputting a signal "H" when at least one of the outputs is the signal "H". In this calorific abnormality detection device, a calorific abnormality is detected when the output from the OR circuit 120 is "H".

Here, the threshold ε15 is set to the lower limit value of the allowable variation range of the difference, and the threshold ε16 is set to the upper limit value of the allowable variation range of the difference.

As has been described above, according to the IGCC and the method of detecting a calorific abnormality according to this embodiment, a calorific abnormality is detected using existing control amounts, and therefore calorimeters are unnecessary, resulting in a decrease in cost.

In each of the above-described embodiments, it is possible to employ a configuration such that when a calorific abnormality is detected, for example, a system operator of the IGCC is informed. Informing means may be visual informing means by, for example, displaying the abnormality on a screen or lighting a lamp or audible informing means for informing the abnormality with sound, such as a buzzer or message.

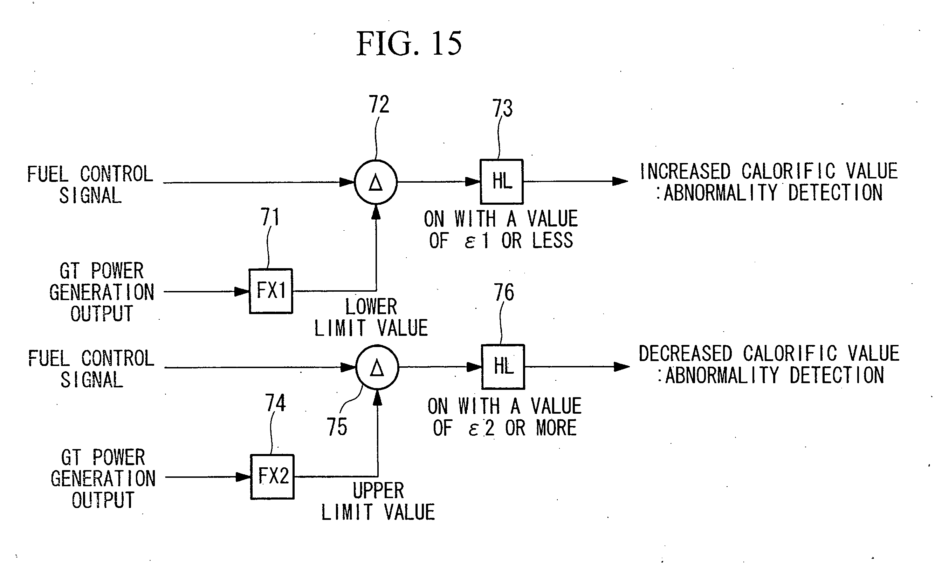

In the method of detecting a calorific abnormality according to each of the above-described embodiments, when a parameter falls outside an allowable variation range, a calorific abnormality is reported. However, it may be detected whether the parameter deviates downward or upward from the allowable variation range. Furthermore, the result thereof may be reported. Specifically, for example, in the calorific abnormality detection device shown in FIG. 4, the OR circuit 77 according to FIG. 4 may be removed to provide a configuration such that the output from the comparator 73 and the output from the comparator 76 are each outputted separately, as shown in FIG. 15. By doing so, a calorific abnormality in which the calorific value is increased can be detected when "H" is outputted from the comparator 73, and a calorific abnormality in which the calorific value is decreased can be detected when "H" is outputted from the comparator 76.

## Claims

1. A method of detecting a calorific abnormality of a gas turbine power generation system, comprising:
a step of defining an allowable variation range of a power generation output of a gas turbine (5b) with respect to a charged fuel amount or an allowable variation range of the charged fuel amount with respect to the power generation output of the gas turbine based on a charged fuel characteristic representing a relation between the fuel amount charged to a combustor (5a) of the gas turbine and the power generation output of the gas turbine at a target calorific value of fuel gas; and
a step of detecting a calorific abnormality of fuel gas when an actually charged fuel amount or an actual power generation output of the gas turbine falls outside the allowable variation range.

2. The method of detecting a calorific abnormality of the gas turbine power generation system according to Claim 1, wherein
in the step of detecting a calorific abnormality,
a high-calorific-value abnormality is detected when the actually charged fuel amount is lower than the lower limit value of the allowable variation range or the actual power generation output of the gas turbine (5b) is higher than the upper limit value of the allowable variation range; and
a low-calorific-value abnormality is detected when the actually charged fuel amount is higher than the upper limit value of the allowable variation range or the actual power generation output of the gas turbine is lower than the lower limit value of the allowable variation range.

3. The method of detecting a calorific abnormality of the gas turbine power generation system according to Claim 1 or 2, further comprising a step of reporting detection of a calorific abnormality when one is detected.

4. A method of detecting a calorific abnormality of an integrated coal gasification combined cycle system (1), comprising:
a step of defining, based on a relation between the amount of at least one of char, air, coal, and oxygen charged to a coal gasification furnace (3) and a power generation output of a gas turbine (5b), an allowable variation range of the power generation output of the gas turbine with respect to the charged amount or an allowable variation range of the charged amount with respect to the power generation output of the gas turbine; and
a step of detecting a calorific abnormality of fuel gas when an actually charged amount or an actual power generation output of the gas turbine falls outside the allowable variation range.

5. A method of detecting a calorific abnormality of an integrated coal gasification combined cycle system (1), wherein a difference between a target charging amount, which relates to adjustment of a calorific value of fuel gas in a coal gasification furnace (3), and an actually charged amount of at least one of char, air, coal, and oxygen to be charged to the coal gasification furnace is calculated, and a calorific abnormality of fuel gas is detected when the difference falls outside a previously determined allowable variation range.

6. The method of detecting a calorific abnormality of an integrated coal gasification combined cycle system (1) according to Claim 4 or 5, further comprising a step of reporting detection of a calorific abnormality when one is detected.

7. A gas turbine power generation system comprising a calorific abnormality detection device that is configured to define an allowable variation range of a power generation output of a gas turbine (5b) with respect to a charged fuel amount or an allowable variation range of the charged fuel amount with respect to a power generation output of the gas turbine based on a charged fuel characteristic representing a relation between the fuel amount charged to a combustor (5a) of the gas turbine and the power generation output of the gas turbine at a target calorific value of fuel gas, and that is configured to detect a calorific abnormality of fuel gas when an actually charged fuel amount or an actual power generation output of the gas turbine falls outside the allowable variation range.

8. An integrated coal gasification combined cycle system (1) comprising a calorific abnormality detection device that is configured to define, based on a relation between the amount of at least one of char, air, coal, and oxygen charged to a coal gasification furnace (3) and a power generation output of a gas turbine (5b), an allowable variation range of the power generation output of the gas turbine with respect to the charged amount or an allowable variation range of the charged amount with respect to the power generation output of the gas turbine, and that is configured to detect a calorific abnormality of fuel gas when an actually charged amount or an actual power generation output of the gas turbine falls outside the allowable variation range.

9. An integrated coal gasification combined cycle system (1) comprising a calorific abnormality detection device that is configured to calculate a difference between a target charging amount, which relates to adjustment of a calorific value of fuel gas in a coal gasification furnace (3), and an actually charged amount of at least one of char, air, coal, and oxygen to be charged to the coal gasification furnace, and that is configured to detect a calorific abnormality of fuel gas when the difference falls outside a previously determined allowable variation range.

## Patentansprüche

1. Verfahren zum Erfassen einer kalorischen Abweichung eines Gasturbinen-Energieerzeugungssystems, aufweisend:
einen Schritt zum Definieren eines erlaubten Variationsbereichs einer Energieerzeugungsausgabe einer Gasturbine (5b) mit Bezug auf eine geladene Brennstoffmenge oder eines erlaubten Variationsbereichs der geladenen Brennstoffmenge mit Bezug auf die Energieerzeugungsausgabe der Gasturbine basierend auf einer Eigenschaft von geladenem Brennstoff, die eine Beziehung zwischen der in einer Brennkammer (5a) der Gasturbine geladenen Brennstoffmenge und der Energieerzeugungsausgabe der Gasturbine bei einem kalorischen Sollwert von Brenngas darstellt, und
einen Schritt zum Erfassen einer kalorischen Abweichung von Brenngas, wenn eine tatsächlich geladene Brennstoffmenge oder eine tatsächliche Energieerzeugungsausgabe der Gasturbine außerhalb des erlaubten Variationsbereichs liegt.

2. Verfahren zum Erfassen einer kalorischen Abweichung des Gasturbinen-Energieerzeugungssystems nach Anspruch 1, wobei
in dem Schritt zum Erfassen einer kalorischen Abweichung,
eine Abweichung eines hochkalorischen Werts erfasst wird, wenn die tatsächlich geladene Brennstoffmenge kleiner als der untere Grenzwert des erlaubten Variationsbereichs ist oder die tatsächliche Energieerzeugungsausgabe der Gasturbine (5b) größer als der obere Grenzwert des erlaubten Variationsbereichs ist, und
eine Abweichung eines niedrigkalorischen Werts erfasst wird, wenn die tatsächlich geladene Brennstoffmenge größer als der obere Grenzwert des erlaubten Variationsbereichs ist oder die tatsächliche Energieerzeugungsausgabe der Gasturbine kleiner als der untere Grenzwert des erlaubten Variationsbereichs ist.

3. Verfahren zum Erfassen einer kalorischen Abweichung des Gasturbinen-Energieerzeugungssystems nach Anspruch 1 oder 2, ferner mit einem Schritt zum Melden einer Erfassung einer kalorischen Abweichung, wenn eins erfasst ist.

4. Verfahren zum Erfassen einer kalorischen Abweichung eines integrierten Kohlevergasungs-Kombikraftsystems (1), aufweisend:
einen Schritt zum Definieren, basierend auf einer Beziehung zwischen der Menge von zumindest Holzkohle, Luft, Kohle oder Sauerstoff, die in einen Kohlevergasungsofen (3) geladen ist, und einer Energieerzeugungsausgabe einer Gasturbine (5b), eines erlaubten Variationsbereichs der Energieerzeugungsausgabe der Gasturbine mit Bezug auf die geladene Menge oder eines erlaubten Variationsbereichs der geladenen Menge mit Bezug auf die Energieerzeugungsausgabe der Gasturbine, und
einen Schritt zum Erfassen einer kalorischen Abweichung von Brenngas, wenn eine tatsächlich geladene Menge oder eine tatsächliche Energieerzeugungsausgabe der Gasturbine außerhalb der erlaubten Variationsbereichs liegt.

5. Verfahren zum Erfassen einer kalorischen Abweichung eines integrierten Kohlevergasungs-Kombikraftsystems (1), wobei eine Differenz zwischen einer Soll-Lademenge, welche sich auf eine Einstellung eines kalorischen Werts von Brenngas in einem Kohlevergasungsofen (3) bezieht, und einer tatsächlich geladenen Menge von zumindest Holzkohle, Luft, Kohle oder Sauerstoff, die in den Kohlevergasungsofen zu laden ist, berechnet wird, und eine kalorische Abweichung von Brenngas erfasst wird, wenn die Differenz außerhalb eines vorher bestimmten erlaubten Variationsbereichs liegt.

6. Verfahren zum Erfassen einer kalorischen Abweichung eines integrierten Kohlevergasungs-Kombikraftsystems (1) nach Anspruch 4 oder 5, ferner mit einem Schritt zum Melden einer Erfassung einer kalorischen Abweichung, wenn eins erfasst ist.

7. Gasturbinen-Energieerzeugungssystem mit einer Erfassungsvorrichtung für eine kalorische Abweichung, die konfiguriert ist, um einen erlaubten Variationsbereich einer Energieerzeugungsausgabe einer Gasturbine (5b) mit Bezug auf eine geladene Brennstoffmenge oder einen erlaubten Variationsbereich der geladenen Brennstoffmenge mit Bezug auf die Energieerzeugungsausgabe der Gasturbine basierend auf einer Eigenschaft von geladenem Brennstoff, die eine Beziehung zwischen der in einer Brennkammer (5a) der Gasturbine geladenen Brennstoffmenge und der Energieerzeugungsausgabe der Gasturbine bei einem kalorischen Sollwert von Brenngas darstellt, zu definieren, und die konfiguriert ist, um eine kalorischen Abweichung von Brenngas zu erfassen, wenn eine tatsächlich geladene Brennstoffmenge oder eine tatsächliche Energieerzeugungsausgabe der Gasturbine außerhalb des erlaubten Variationsbereichs liegt.

8. Integriertes Kohlevergasungs-Kombikraftsystem (1) mit einer Erfassungsvorrichtung für eine kalorische Abweichung, die konfiguriert ist, um basierend auf einer Beziehung zwischen der Menge von zumindest Holzkohle, Luft, Kohle oder Sauerstoff, die in einen Kohlevergasungsofen (3) geladen ist, und einer Energieerzeugungsausgabe einer Gasturbine (5b), einen erlaubten Variationsbereich der Energieerzeugungsausgabe der Gasturbine mit Bezug auf die geladene Menge oder einen erlaubten Variationsbereich der geladenen Menge mit Bezug auf die Energieerzeugungsausgabe der Gasturbine zu definieren, und die konfiguriert ist, um eine kalorische Abweichung von Brenngas zu erfassen, wenn eine tatsächlich geladene Menge oder eine tatsächliche Energieerzeugungsausgabe der Gasturbine außerhalb des erlaubten Variationsbereichs liegt.

9. Integriertes Kohlevergasungs-Kombikraftsystem (1) mit einer Erfassungsvorrichtung für eine kalorische Abweichung, die konfiguriert ist, um eine Differenz zwischen einer Soll-Lademenge, welche sich auf eine Einstellung eines kalorischen Werts von Brenngas in einem Kohlevergasungsofen (3) bezieht, und einer tatsächlich geladenen Menge von zumindest Holzkohle, Luft, Kohle oder Sauerstoff, die in den Kohlevergasungsofen zu laden ist, zu berechnen, und die konfiguriert ist, um eine kalorische Abweichung von Brenngas zu erfassen, wenn die Differenz außerhalb eines vorher bestimmten erlaubten Variationsbereichs liegt.

## Revendications

1. Procédé pour détecter une anomalie calorifique d'un système de génération de puissance de turbine à gaz, comprenant :
une étape consistant à définir une plage de variation admissible d'une sortie de génération de puissance d'une turbine à gaz (5b) par rapport à une quantité de carburant chargée ou une plage de variation admissible de la quantité de carburant chargée par rapport à la sortie de génération de puissance de la turbine à gaz en fonction d'une caractéristique de carburant chargé représentant une relation entre la quantité de carburant chargée dans une chambre de combustion (5a) de la turbine à gaz et la sortie de génération de puissance de la turbine à gaz à une valeur calorifique cible du gaz combustible ; et
une étape de détection d'une anomalie calorifique du gaz combustible lorsqu'une quantité de carburant réellement chargée ou une sortie de génération de puissance réelle de la turbine à gaz est hors de la plage de variation admissible.

2. Procédé pour détecter une anomalie calorifique du système de génération de puissance de turbine à gaz selon la revendication 1, dans lequel
à l'étape de détection d'une anomalie calorifique, une anomalie de haute valeur calorifique est détectée lorsque la quantité de carburant réellement chargée est inférieure à la valeur de limite inférieure de la plage de variation admissible ou que la sortie de génération de puissance réelle de la turbine à gaz (5b) est supérieure à la valeur de limite supérieure de la plage de variation admissible ; et
une anomalie de faible valeur calorifique est détectée lorsque la quantité de carburant réellement chargée est supérieure à la valeur de limite supérieure de la plage de variation admissible ou que la sortie de génération de puissance réelle de la turbine à gaz est inférieure à la valeur de limite inférieure de la plage de variation admissible.

3. Procédé pour détecter une anomalie calorifique du système de génération de puissance de turbine à gaz selon la revendication 1 ou 2, comprenant en outre une étape consistant à signaler la détection d'une anomalie calorifique lorsqu'une telle anomalie est détectée.

4. Procédé pour détecter une anomalie calorifique d'un système intégré à cycle combiné de gazéification du charbon (1), comprenant :
une étape consistant à définir, sur la base d'une relation entre la quantité d'au moins l'un parmi les résidus de carbonisation, l'air, le charbon et l'oxygène, chargé dans un four de gazéification de charbon (3) et une sortie de génération de puissance d'une turbine à gaz (5b), une plage de variation admissible de la sortie de génération de puissance de la turbine à gaz par rapport à la quantité chargée ou une plage de variation admissible de la quantité chargée par rapport à la sortie de génération de puissance de la turbine à gaz ; et
une étape de détection d'une anomalie calorifique de gaz combustible lorsqu'une quantité réellement chargée ou une sortie de génération de puissance réelle de la turbine à gaz est hors de la plage de variation admissible.

5. Procédé pour détecter une anomalie calorifique d'un système intégré à cycle combiné de gazéification du charbon (1), dans lequel une différence entre une quantité de chargement cible qui concerne un ajustement d'une valeur calorifique de gaz combustible dans un four de gazéification de charbon (3), et une quantité réellement chargée d'au moins l'un parmi des résidus de carbonisation, l'air, le charbon et l'oxygène à charger dans le four de gazéification de charbon est calculée, et une anomalie calorifique de gaz combustible est détectée lorsque la différence est hors d'une plage de variation admissible déterminée au préalable.

6. Procédé pour détecter une anomalie calorifique d'un système intégré à cycle combiné de gazéification du charbon (1) selon la revendication 4 ou 5, comprenant en outre une étape consistant à signaler la détection d'une anomalie calorifique lorsqu'une telle anomalie est détectée.

7. Système de génération de puissance de turbine à gaz comprenant un dispositif de détection d'anomalie calorifique qui est configuré pour définir une plage de variation admissible d'une sortie de génération de puissance d'une turbine à gaz (5b) par rapport à une quantité de carburant chargée ou une plage de variation admissible de la quantité de carburant chargée par rapport à une sortie de génération de puissance de la turbine à gaz en fonction d'une caractéristique de carburant chargé représentant une relation entre la quantité de carburant chargée dans une chambre de combustion (5a) de la turbine à gaz et la sortie de génération de puissance de la turbine à gaz à une valeur calorifique cible du gaz combustible, et qui est configuré pour détecter une anomalie calorifique du gaz combustible lorsqu'une quantité de carburant réellement chargée ou une sortie de génération de puissance réelle de la turbine à gaz est hors de la plage de variation admissible.

8. Système intégré à cycle combiné de gazéification du charbon (1) comprenant un dispositif de détection d'anomalie calorifique qui est configuré pour définir, en fonction d'une relation entre la quantité d'au moins l'un parmi les résidus de carbonisation, l'air, de charbon et l'oxygène, chargé dans un four de gazéification du charbon (3) et une sortie de génération de puissance d'une turbine à gaz (5b), une plage de variation admissible de la sortie de génération de puissance de la turbine à gaz par rapport à la quantité chargée ou une plage de variation admissible de la quantité chargée par rapport à la sortie de génération de puissance de la turbine à gaz, et qui est configuré pour détecter une anomalie calorifique du gaz combustible lorsqu'une quantité réellement chargée ou une sortie de génération de puissance réelle de la turbine à gaz est hors de la plage de variation admissible.

9. Système intégré à cycle combiné de gazéification du charbon (1) comprenant un dispositif de détection d'anomalie calorifique qui est configuré pour calculer une différence entre une quantité de chargement cible, qui concerne l'ajustement d'une valeur calorifique du gaz combustible dans un four de gazéification de charbon (3), et une quantité réellement chargée d'au moins l'un parmi les résidus de carbonisation, l'air, le charbon et l'oxygène à charger dans le four de gazéification de charbon, et qui est configuré pour détecter une anomalie calorifique du gaz combustible lorsque la différence est hors d'une plage de variation admissible déterminée au préalable.
